# EUROPEAN PATENT APPLICATION

(11) **EP 4 501 673 A1**
(43) Date of publication of application: **05.02.2025**
(21) Application number: 23188838.9
(22) Date of filing: 01.08.2023
(51) Int. Cl.: B60J 5/04, B60J 10/30, B60J 10/74

(54) **VEHICLE DOOR AND VEHICLE**

(71) Applicant: Nio Technology (Anhui) Co., Ltd, Hefei City, Anhui 230601 (CN)
(72) Inventor: GOTO, Ryuichiro, 81679 München (DE); TARRONE, Alessandro, 81679 München (DE)
(74) Representative: Vossius & Partner Patentanwälte Rechtsanwälte mbB

(57) **Abstract**

The present disclosure relates to a vehicle door (10) which includes a door frame (12) which defines a window opening (14), a window pane (16) configured to be moved relative to the door frame (12) to selectively open and close the window opening (14). The window pane (16) has an interior side (18) which faces an interior (19) of the vehicle (50) and an exterior side (20) which faces an exterior (21) of the vehicle (50). The vehicle door (10) further includes a sealing arrangement (30) configured to seal against the window pane (16) to seal the interior (19) from the exterior (21) of the vehicle (50), and at least one sealing support device (80). The sealing arrangement (30) is mounted to the sealing support device (80) and the sealing support device (80) is attached to the door frame (12).

The present disclosure also relates to a vehicle.

## Description

Mobility, in particular by means of passenger vehicles, is a key aspect in today's society and economy. For instance, many people travel by at least one transportation means relatively frequently, e.g., to commute to and from a place of work and/or for leisure reasons.

Several aspects of vehicles which are used as transportation means play a relatively important role in the configuration of the respective vehicles. For instance, manufacturers of vehicles generally strive to reduce the energy consumption of vehicles, e.g., to reduce the costs of operation of the vehicles, to reduce the ecological footprint of the vehicles and/or to meet one or more regulations, e.g., one or more energy consumption regulations.

In this respect, the aerodynamic properties of vehicles are a significant factor in the energy consumption of vehicles. For instance, an aerodynamic resistance, also known as aerodynamic drag, on vehicles during movement of the vehicles is relatively high. In particular, the drag force(s) on a vehicle generally increase with an increasing traveling speed of the respective vehicle. Hence, configuring vehicles in an aerodynamically efficient manner may significantly reduce the energy consumption of the vehicles.

Although improving the aerodynamic properties of vehicles has played a relatively important role for many years, several regions of vehicles may still be further improved aerodynamically. Hence, it is desirable to further improve the aerodynamic properties of vehicles.

Moreover, the aesthetic appeal of vehicles is also a relatively important aspect. For instance, a buyer's decision to purchase a certain vehicle is often based at least partially on the appearance of the respective vehicle(s). Manufacturers of vehicles have therefore spent a considerable amount of time configuring vehicles to be aesthetically appealing to buyers. However, certain aspects of a vehicle's appearance have not, or at least not sufficiently, been addressed in the prior art.

Moreover, the packaging of a vehicle plays a relatively important role when configuring/designing the vehicle. Generally speaking, it is desirable to configure the vehicle to have a relatively tight packaging, i.e., to configure and arrange the components of the vehicle in a space-efficient manner. However, one or more aspects of the packaging of a vehicle, in particular when configuring one or more components of the vehicle with a relatively strong focus on efficient aerodynamics, have not, or at least not sufficiently, been addressed in the prior art.

Hence, although a considerable amount of effort has been put into developing and improving vehicles, there remains a desire and/or a need to further improve vehicles based on the above-identified aspects.

It is therefore an object of the present invention to improve one or more aerodynamic properties of a vehicle.

It is a further object of the present invention to improve the appearance of a vehicle.

It is a further object of the present invention to improve the packaging of a vehicle.

The above-identified objects are achieved by a vehicle door for a vehicle according to a first aspect of the present disclosure, as defined by the features of claim 1. Preferred embodiments are defined by the features of the dependent claims, respectively.

The vehicle door may include at least one door frame which defines at least one window opening therein. The vehicle door may further include at least one window pane configured to be moved relative to the door frame to selectively open and close the window opening. The window pane may have an interior side which faces an interior of the vehicle and an exterior side which faces an exterior of the vehicle, at least when the window pane is in a closed position, i.e., when the window pane substantially closes the window opening. The interior side and/or the exterior side may each include one or more surfaces.

The vehicle door may further include at least one sealing arrangement configured to at least partially seal against the window pane to at least partially seal the interior from the exterior of the vehicle, at least when the window pane is in a completely closed position. The seal of the sealing arrangement may prevent, or at least inhibit, fluids, i.e., gases and fluids, and solid matter from passing through the window opening from the exterior to the interior of the vehicle and vice versa, at least when the window pane is in a completely closed position.

The vehicle door may further include at least one sealing support device. The sealing arrangement may be mounted to the sealing support device and the sealing support device may be attached to the door frame. Typically, door frames are manufactured by pressing or stamping sheet metal, in particular for economic reasons. However, it may therefore be disadvantageous to mount the sealing/sealing arrangement directly to the door frame, e.g., by configuring a portion of the door frame itself, in particular an edge of the door frame, as a sealing mount, since this may limit the configuration of such a sealing mount, e.g., due to the manufacturing tolerances which are achievable through pressing or stamping sheet metal and/or due to the limitations on the shape and/or dimensions of features which are achievable through pressing or stamping sheet metal. This may lead to a relatively bulky construction and/or a relatively inaccurate construction of the sealing mount. This may limit the flexibility in the packaging configuration of the vehicle, e.g., by increasing the size of the door frame and/or reducing the window opening and/or reducing an interior space of the vehicle. Moreover, this may reduce the safety of the vehicle.

Thus, providing a separate sealing support device, i.e., a sealing mount, which is then attached to the door frame may provide greater flexibility for configuring the sealing support device, since the configuration of the sealing support device may then be independent from the type of manufacturing process used to make the door frame. In particular, the configuration of the sealing support device is not bound to stamping/pressing. Instead, a number of further types of manufacturing processes may be employed to manufacture the sealing support device which may provide greater flexibility in configuring the sealing support device. This may allow the sealing support device to be optimized more precisely, e.g., in a space-efficient manner, which improve the packaging of the vehicle door.

Preferably, the sealing support device is configured as a window pane guide for guiding the window pane during the movement between a closed position and an open position of the window pane. Thus, the sealing support device, in its function as a window pane guide, may provide a counterforce to a negative pressure prevalent on the outside of the cabin of the vehicle, in particular during movement of the vehicle, to prevent or at least limit displacement of the window pane towards the outside of the cabin of the vehicle.

Preferably, the sealing support device includes at least two side segments. The side segments may be arranged towards or at opposite sides of the window opening to guide the window pane on opposite sides of the window pane during the movement between a closed position and an open position of the window pane.

Preferably, the sealing support device includes at least one top segment which interconnects the two side segments. Thus, the sealing support device may provide an attachment interface for the sealing arrangement along the top and sides of the window, preferably in an uninterrupted manner.

Preferably, the sealing support device is attached to the door frame in a non-integral manner.

Preferably, the sealing support device is:
made of a different material and/or by a different type of manufacturing process than the door frame, preferably by a type of manufacturing process other than stamping;
   and/or
made of a non-sheet metal material.

Preferably, the sealing support device extends along side portions and a top portion of the window pane, when the window pane is in a completely closed position.

Preferably, the sealing support device extends beyond a lower edge of the window opening. This may extend a length and/or surface of the sealing support device along which the window pane may extend and/or be guided. This may increase the stability and/or resistance of the window pane against external forces, in particular with respect to aerodynamic forces, e.g., a negative pressure prevalent on the outside of the cabin of the vehicle, in particular during movement of the vehicle.

Preferably, the sealing support device is removably attached to the door frame.

Preferably, at least one of the sealing support device and the sealing arrangement includes at least one receiving opening and the other of the sealing support device and the sealing arrangement includes an engagement portion configured to be at least partially received in the receiving opening to secure the sealing arrangement to the sealing support device. The may provide a relatively simple and effective means for fixedly connecting the sealing support device and the sealing arrangement.

Preferably, the receiving opening extends into the sealing support device and/or the sealing arrangement, respectively, along a receiving opening plane which is substantially parallel to at least a section of the window pane.

Preferably, at least one of the sealing support device and the sealing arrangement extends at least partially into at least a section of the other of the sealing support device and the sealing arrangement in a direction which lies in an extension plane which is substantially parallel to at least a section of the window pane.

Preferably, the sealing support device is arranged at an edge of the door frame.

Preferably, the sealing support device is attached to an inner surface of the door frame which faces away from the exterior of the vehicle.

Preferably, at least one sealing support device is configured to reinforce the door frame.

Preferably, the sealing arrangement is configured as an integrally and/or monolithically formed unit.

The entire sealing arrangement may be arranged completely on the interior side of the window pane, at least when the window pane is in a completely closed position. In other words, the vehicle door may be configured such that no portion of the sealing arrangement, or any sealing element, is arranged on the exterior side, when the window pane is in a completely closed position.

In other words, the vehicle door is configured such that the sealing arrangement does not extend towards the exterior of the vehicle beyond the outer surface of window pane, when the window pane is in a completely closed position. Preferably, the sealing arrangement terminates at a distance from the outer surface of window pane, when the window pane is in a completely closed position.

The "interior side" of the window pane may include at least one inner surface of the window pane which faces and/or at least partially delimits a cabin of the vehicle, and optionally a side portion of the window pane, if present, which connects the inner surface of the window pane and an outer or exterior surface of the window pane which faces the exterior, i.e., an environment, of the vehicle, at least when the window pane is in a completely closed position. Thus, the vehicle door may be free of the sealing arrangement, or any sealing element, along the entire outer or exterior surface of the window pane. Preferably, the side portion of the window pane, if present, is also free of the sealing arrangement, or any sealing element, e.g., since the sealing effect along the inner surface of the window pane by means of the sealing arrangement may be sufficient.

The sealing arrangement may be configured to seal against the window pane, e.g., substantially about the entire circumference or along one or more portions of the circumference of the window pane. For instance, the seal of the sealing arrangement against the window pane may be interrupted along one or more sections of the window pane, at least when the window pane is in a completely closed position.

The sealing arrangement may be configured such that the window pane at least partially contacts the sealing arrangement, at least when the window pane is in a completely closed position. Hence, configuring the sealing arrangement such that the entire sealing arrangement is arranged completely on the interior side of the window pane, at least when the window pane is in a completely closed position, may mean that the window pane at least partially contacts the sealing arrangement only along the interior side of the window pane. In other words, the vehicle door may be configured such that the exterior side of the window pane is completely free of contact with the sealing arrangement.

However, the sealing arrangement may be at least partially arranged at a (relatively small) distance, e.g., less than 1 mm, between the sealing arrangement and the window pane, when the window pane is in a completely closed position. In fact, contact between the sealing arrangement and the window pane is not necessarily required to provide a sealing effect between the sealing arrangement and the window pane. The sealing arrangement may prevent, or at least inhibit, fluids, i.e., gases and fluids, and solid matter from passing through the window opening from the exterior to the interior of the vehicle and vice versa, even if a (relatively small) gap is present at least partially between the sealing arrangement and the window pane, e.g., the inner surface and/or the side portion of the window pane, when the window pane is in a completely closed position.

By contrast to the present invention, at least a portion of the respective seal provided in the prior art is arranged along an exterior of the respective window, e.g., to seal against and/or to support an outer surface of the respective window, when the window pane is in a completely closed position. Hence, in the case of the prior art, an interface between the respective sealing arrangement(s) and the respective window pane, i.e., at a transition from the respective sealing arrangement(s) to the respective window pane and/or vice versa, on an exterior of the vehicle, e.g., an exterior side of the respective window pane, may increase the aerodynamic drag on the vehicle door, e.g., by causing one or more disruptions in the air flow. This may increase an energy consumption and/or may negatively impact one or more driving characteristics, e.g., stability during driving, of the vehicle.

Thus, configuring the vehicle door such that the entire sealing arrangement is arranged completely on the interior side of the window pane, at least when the window pane is in a completely closed position, according to the present invention may essentially eliminate an interface between respective sealing arrangement(s) and the respective window pane, i.e., at a transition from the respective sealing arrangement(s) to the respective window pane and/or vice versa, on the exterior of the vehicle, in particular on the exterior side of the respective window pane. This may improve one or more aerodynamic properties of the vehicle door, e.g., which may reduce an energy consumption of the vehicle.

The material(s), which the window pane is made of, may be chosen from a wide range of materials. For instance, the window pane may be at least partially made of glass and/or one or more plastic materials. Preferably, the window pane is at least partially transparent and/or at least partially translucent.

The window pane may be a single integrally formed component. Alternatively, the window pane may include a plurality of window pane components which may be interconnected or unconnected.

The sealing arrangement may be configured as a single integral element. Alternatively, the sealing arrangement may include a plurality of sealing elements which may be at least partially interconnected. One or more of the sealing elements may be unconnected.

The sealing arrangement may be made of a relatively soft and/or flexible material, e.g., rubber or silicone.

The door frame may be configured as a single integral component. Alternatively, the door frame may include a plurality of components which may be at least partially interconnected. For instance, the door frame may include a plurality of panels. The door frame may at least partially define an exterior surface, e.g., an outer skin, of the vehicle, when the vehicle is completely assembled. The door frame may at least partially be made of sheet metal.

The door frame may include one or more hollow spaces, e.g., for at least partially housing one or more components, e.g., which may include one or more components related to the present invention, e.g., at least a portion of a guide element, which is described further below.

The vehicle door may be configured to be coupled, preferably hingedly coupled via one or more hinges, to a vehicle body of the vehicle.

At least one window moving mechanism may be provided for moving the window pane relative to the doorframe to selectively open and close the window opening. For instance, the window moving mechanism may be operable by a user, e.g., by manually, for instance by means of a window crank, and/or electrically, for instance by operating one or more operating elements, e.g., one or more buttons or sliders, which generate one or more electrical signals for moving the window pane upon operation by the user.

Thought the present invention is mainly described based on a vehicle door, the invention may be implemented in any vehicle component which may include a window opening and a window pane for closing the window opening. For instance, the invention may be implemented in a trunk lid of a vehicle.

The vehicle may be any type of vehicle. Preferably, the vehicle is a passenger vehicle and/or a commercial vehicle configured to transport one or more persons, e.g., a car, bus, or the like. Alternatively, the vehicle may be a rail-bound vehicle, e.g., a train or train wagon.

The vehicle door may further include at least one guide element configured to guide the window pane during the movement between a closed position and an open position of the window pane. The guide element may provide support to the window pane, e.g., during movement of the window pane between the closed position and the open position and/or when the window pane is stationary, e.g., in the closed position, the open position and/or therebetween.

The guide element may be arranged on the interior side of the window pane. In other words, the vehicle door is configured such that the guide element does not extend towards the exterior of the vehicle beyond the outer surface of window pane, at least when the window pane is in a completely closed position. Preferably, the guide element terminates at a distance from the outer surface of window pane, at least when the window pane is in a completely closed position.

In much of the prior art, the window pane is at least partially received and/or guided within at least a section of the respective sealing arrangement. In other words, at least a portion of the sealing arrangement is arranged on an exterior side of the window pane in the known prior art solutions. By contrast, the present invention does not rely on the sealing arrangement for guiding the window pane on the exterior side of the window pane. This may allow the guide element to be placed in a location which does not adversely affect the aerodynamic properties of the vehicle door, e.g., in one or more sections of the vehicle door which is generally shielded from external air flow, or at least reduces the adverse effects of the guide element on the aerodynamic properties of the vehicle door. For instance, the guide element may be arranged on the interior side of the window pane, e.g., along one or more sections of the doorframe which define the window opening, i.e., along one or more edges of the window pane. Alternatively, or additionally, the guide element may be arranged at a greater distance from the window opening, e.g., below the window opening, e.g., within at least one cavity of the door frame.

Preferably, the guide element extends along at least a section of a lateral edge of the window opening, preferably on the interior side of the window pane, and beyond a bottom edge of the window opening.

The guide may be attached to at least a section of the door frame. The guide may provide a primary support, or the only support, for the window pane, e.g., against one or more forces, e.g., caused by air flow on the exterior of the vehicle. The guide may also provide a fixation of the window, e.g., to prevent vibrations of the window pane.

The guide element may be at least partially transparent, e.g., such that the guide element is less noticeable, in particular if the guide element is in a field of view.

The vehicle door may further include at least two guide elements, e.g., at least two of the above-identified at least one guide element. The guide elements may be identical or at least similar. Alternatively, the guide elements may be configured differently. The guide elements may be arranged towards or at opposite sides of the window opening and/or the window pane to guide the window pane on opposite sides of the window pane during the movement between a closed position and an open position of the window pane.

The guide element(s) may be attached to the door frame in a non-integral manner. This may provide greater flexibility for configuring and/or manufacturing the guide element(s). Thus, the guide element(s) may be manufactured as separate components, e.g., not of sheet metal from stamping, such as the door frame. For example, the guide element(s) may be attached to the door frame by a friction connection, a form-lock fixing (positive connection) and/or a material bond, e.g., a glue.

The vehicle door may further include at least one counter guide element configured to interact with the respective guide element to guide the window pane during the movement between the open position and the closed position of the window pane. One of the guide element(s) and the counter guide element(s) may be attached, preferably fixedly attached, to the door frame or the window pane and the other of the guide element(s) and the counter guide element(s) may be attached, preferably fixedly attached, to the other of the doorframe or the window pane. Preferably, the guide element(s) may be attached, preferably fixedly attached, to the door frame and the counter guide element may be attached, preferably fixedly attached, to the window pane.

At least one of the guide element and the counter guide element may include at least one channel configured to at least partially receive the other of the guide element and the counter-guide element to guide the window pane during the movement between the open position and the closed position of the window pane. Hence, the channel may provide a guiding means for guiding the window pane during movement between the open position and the closed position of the window pane.

Additionally, or alternatively, a portion of an edge of the window pane may be at least partially received and guided in the guide element(s) during the movement between an open position and a closed position of the window pane. Such a configuration may replace the counter-guide elements as a means for engaging the guide element(s) or may supplement the counter-guide elements, e.g., by providing further guiding of the window pane.

The counter guide element may be fixed to and/or integrated in the window pane, preferably to and/or on an interior surface of the window pane which faces the interior, e.g., the cabin, of the vehicle. The connection between the counter-guide element and window pane may be a friction connection, a form-lock fixing (positive connection) and/or a material bond, e.g., a glue. For instance, one or more mechanical connectors, e.g., screws, rivets, etc., may be provided to connect, preferably fixedly connect, the counter guide element to the window pane. The term "integrated", i.e., within the context that the counter guide element may be integrated in the window pane, means that the counter guide element may be formed integrally with the window pane.

The counter guide element(s) may be at least partially transparent, e.g., such that the counter guide element(s) is/are less noticeable, in particular if the counter guide element(s) is/are in a field of view.

The vehicle door may further include at least one sealing mount. The sealing mount may be configured such that at least a portion of the sealing arrangement is securable to the sealing mount. In other words, at least a portion of the sealing mount may provide a support and/or a fixation for the sealing arrangement. The sealing mount may be attached, preferably fixedly attached, to at least a section of the door frame. Alternatively, the sealing mount may be integrally formed with the doorframe, e.g., the sealing mount may be a part of the doorframe. For instance, the sealing mount may be provided along one or more sections of at least one edge of the door frame. The sealing arrangement may be removably securable to at least a portion of the sealing mount, e.g., to replace the sealing arrangement.

The sealing mount may include a single mount section for securing the sealing arrangement or a plurality of mount sections which may be interconnected, disconnected, spaced apart, etc.

At least one of the sealing mount and the sealing arrangement may include at least one receiving opening and the other of the sealing mount and the sealing arrangement may include an engagement portion configured to be at least partially received in the receiving opening to secure the sealing arrangement to the sealing mount. This may provide a secure attachment of the sealing arrangement to the sealing mount along the receiving opening and the engagement portion. For instance, the engagement portion and the receiving opening may be securably connected to each other by a friction connection, a form-lock fixing (positive connection) and/or a material bond, e.g., by means of glue.

The receiving opening may extend into the sealing mount and/or the sealing arrangement, respectively, along a receiving opening plane which is substantially parallel to at least a section of the window pane. Preferably, the receiving opening may extend into the sealing mount and/or the sealing arrangement, respectively, along a receiving opening plane which is substantially parallel to an outer surface of the window pane which faces the exterior, i.e., an environment, of the vehicle and/or an inner surface of the window pane which faces and/or at least partially delimits an interior, e.g., a cabin, of the vehicle, at least when the window pane is in a completely closed position. Such a configuration, in particular with respect to the above-identified orientation of the receiving opening, may reduce the space required for the attachment of the sealing mount and the sealing arrangement which may provide a relatively compact construction, e.g., compared with a receiving opening which extends, e.g., perpendicularly to the window pane. This may provide greater flexibility in the packaging configuration of the vehicle, e.g., to realize a tighter packaging.

At least one of the sealing mount and the sealing arrangement may extend at least partially into at least a section of the other of the sealing mount and the sealing arrangement in a direction which lies in an extension plane which is substantially parallel to at least a section of the window pane. Preferably, the extension plane may extend substantially parallel to an outer surface of the window pane which faces the exterior, i.e., an environment, of the vehicle and/or an inner surface of the window pane which faces and/or at least partially delimits the interior, e.g., the cabin, of the vehicle, at least when the window pane is in a completely closed position. This may provide a relatively compact construction.

The sealing mount may be arranged at one or more sections of at least one edge of the door frame. Preferably, the sealing mount may be formed by one or more sections of at least one edge of the door frame.

The sealing mount may be configured integrally with at least a section of the door frame.

At least one of the sealing mount and the sealing arrangement may include at least one attachment section configured to at least partially engage the other of the sealing mount and the sealing arrangement.

The attachment section may include a first section and a second section, and optionally also a third section. Preferably, the sealing mount includes the attachment section. As stated above, the sealing mount may be integrally formed with the door frame, e.g., the sealing mount may be a part of the door frame. For instance, the sealing mount may be provided along one or more sections of at least one edge of the door frame. Hence, the first section, the second section, and the third section if present, of the attachment section may be a part, e.g., at least a section of an edge, of the door frame. The second section may interconnect the first section and the third section. The first section may be configured to engage, preferably fixedly engage, with the sealing arrangement, e.g., in that at least a portion of the first section is receivable in at least a section of the sealing arrangement and/or vice versa.

The first section may be a free end of the door frame. The second section, and optionally also the third section if present, may connect the first section to the other section(s) of the door frame.

The first section, the second section, and/or the third section may be angled relative to each other, i.e., by an angle greater than 0°. This may provide a relatively simple construction for providing an attachment section, e.g., by bending an edge of the door frame by the respective angle(s). Moreover, this may allow an orientation of the engagement between the sealing arrangement and the sealing mount to be adapted, e.g., to reduce the space required by the attachment of the sealing arrangement and the sealing mount to provide a relatively compact construction. The second section may be angled relative to the first section by an angle from 45° to 135°, preferably from 60° to 120°, more preferably from 75° to 105°, most preferably by substantially 90°. Alternatively, or additionally, the third section may be angled relative to the second section by an angle from 45° to 135°, preferably from 60° to 120°, more preferably from 75° to 105°, most preferably by substantially 90°.

The first section, and optionally also the third section, may extend substantially parallel to at least a section of the window pane. Preferably, the first section, and optionally also the third section, may extend substantially parallel to an outer surface of the window pane which faces the exterior, i.e., an environment, of the vehicle and/or an inner surface of the window pane which faces and/or at least partially delimits the interior, e.g., the cabin, of the vehicle, at least when the window pane is in a completely closed position. Hence, the angle between the first section and the second section may depend on an orientation, e.g., a slant or tilt angle, of the window pane. Thus, the angle between the first section and the second section may be in a range close to 90°, but not exactly 90°. For instance, the angle between the first section and the second section may be in a range from 70° to 89° or 91° to 110°.

The first section and the third section, if provided, may be extend substantially parallel to each other. Preferably, the angle between the first section and the second section and the angle between the second section and the third section are substantially identical, or at least within 30°, preferably within 20°, of each other. Alternatively, or additionally, the angle between the first section and the second section and the angle between the second section and the third section are both positive or negative.

At least a section of the sealing mount and at least a section of the sealing arrangement may be each configured as substantially U-shaped sections which are configured to interconnect with each other to secure the sealing arrangement to the sealing mount. This may provide a relatively compact construction. Preferably, the sealing mount is integrally formed with the door frame, as stated above, and the U-shaped section is provided at or by an edge of the door frame.

The (inter)connection between the sealing mount and the sealing arrangement may be a friction connection, a form-lock fixing (positive connection) and/or a material bond or adhesive connection, e.g., by means of an adhesive, such as glue.

The guide elements, when a plurality of guide elements are provided, may be interconnected by at least one interconnecting element which preferably extends along an upper peripherical section of the door frame. This may provide more stability to the guide elements. The interconnecting element may also increase the stability of the door frame, e.g., providing greater resistance to forces, e.g., by reinforcing the door frame. The upper peripherical section may at least partially define an upper edge of the window opening.

The interconnecting element may be configured such that at least a portion of the sealing arrangement is securable to the interconnecting element. For instance, a portion of the sealing mount may be provided by the interconnecting element.

The vehicle door may further include at least one reinforcement structure which is connected to the door frame. The at least one reinforcement structure may be configured to at least partially reinforce the door frame.

The vehicle door may be configured such that a circumferential edge, preferably the entire circumferential edge, of an exterior surface of the window pane, which faces the exterior side of the window pane, is substantially flush with an outer surface of the door frame which faces an exterior of the vehicle, when the window pane is in a completely closed state. The outer surface of the door frame may be an outer skin of the vehicle, when the vehicle is fully assembled. This may provide a relatively smooth transition from the exterior surface of the window pane to the outer surface of the door frame which may improve the aerodynamic properties of the vehicle door.

The present invention also relates to a mounting assembly according to a second aspect of the present invention. The features, embodiments, and advantages described above with respect to the vehicle door apply to the mounting assembly accordingly.

The mounting assembly may be configured to mount at least one window pane to at least one door frame of a vehicle door of a vehicle, the door frame defining at least one window opening therein and the window pane being configured to be moved relative to the door frame to selectively open and close the window opening.

The mounting assembly may include at least one sealing arrangement configured to at least partially seal against the window pane to at least partially seal an interior of the vehicle from an exterior of the vehicle, when the window pane is mounted to the door frame and at least when the window pane is in a completely closed state.

The mounting assembly may include at least one sealing support device. The sealing arrangement may be mountable to the sealing support device and the sealing support device may be attachable to the door frame.

The entire sealing arrangement may be arranged completely on an interior side of the window pane which faces the interior of the vehicle, when the window pane is in a completely closed state.

The present invention also relates to a vehicle according to a third aspect of the present invention. The features, embodiments, and advantages described above with respect to the vehicle door apply to the vehicle accordingly.

The vehicle may include at least one cabin configured to house at least one object, e.g., at least one human, at least one cabin opening which connects the cabin and an environment of the vehicle, and at least one vehicle door according to any of the embodiments described herein. The vehicle door may be configured to selectively open and close the cabin opening.

The vehicle may optionally include at least one drive means, e.g., including a combustion engine and/or an electric drive, configured to drive the vehicle.

The following list of aspects provides alternative and/or further features of the invention:
1. A vehicle component, preferably a vehicle door, for a vehicle which includes:
   at least one frame component, preferably a door frame, which defines at least one window opening therein;
   at least one window pane, which is preferably configured to be moved relative to the frame component to selectively open and close the window opening, wherein the window pane has an interior side which faces an interior of the vehicle and an exterior side which faces an exterior of the vehicle, preferably when the window pane is in a closed position; and
   at least one sealing arrangement configured to at least partially seal against the window pane to at least partially seal the interior from the exterior of the vehicle, preferably at least when the window pane is in a completely closed position;
   preferably wherein the vehicle component further includes at least one sealing support device, wherein the sealing arrangement is mounted to the sealing support device, and wherein the sealing support device is attached to the frame component.
2. The vehicle component according to aspect 1, wherein the exterior side of the window is free of sealing arrangement, at least when the window pane is in a completely closed position, and/or wherein the entire sealing arrangement is arranged completely on the interior side of the window pane, at least when the window pane is in a completely closed position.
3. The vehicle component according to aspect 1 or 2, further including at least one guide element configured to guide the window pane during the movement between a closed position and an open position of the window pane.
4. The vehicle component according to any of the preceding aspects, wherein the component includes at least two guide elements, wherein the guide elements are arranged towards or at opposite sides of the window opening to guide the window pane on opposite sides of the window pane during the movement between a closed position and an open position of the window pane.
5. The vehicle component according to aspect 3 or 4, wherein the guide element(s) is/are attached to the frame component in a non-integral manner.
6. The vehicle component according to any of aspects 3 to 5, further including at least one counter guide element configured to interact with the respective guide element to guide the window pane during the movement between the open position and the closed position of the window pane.
7. The vehicle component according to aspect 6, wherein at least one of the guide element and the counter guide element includes at least one channel configured to at least partially receive the other of the guide element and the counter-guide element to guide the window pane during the movement between the open position and the closed position of the window pane.
8. The vehicle component according to aspect 6 or 7, wherein the counter guide element is fixed to and/or integrated in the window pane, preferably to an interior surface of the window pane which faces the interior of the vehicle.
9. The vehicle component according to any of the preceding aspects, further including at least one sealing mount configured such that at least a portion of the sealing arrangement is securable to the sealing mount.
10. The vehicle component according to aspect 9, wherein at least one of the sealing mount and the sealing arrangement includes at least one receiving opening and the other of the sealing mount and the sealing arrangement includes an engagement portion configured to be at least partially received in the receiving opening to secure the sealing arrangement to the sealing mount.
11. The vehicle component according to aspect 10, wherein the receiving opening extends into the sealing mount and/or the sealing arrangement, respectively, along a receiving opening plane which is substantially parallel to at least a section of the window pane.
12. The vehicle component according to any of aspects 9 to 11, wherein at least one of the sealing mount and the sealing arrangement extends at least partially into at least a section of the other of the sealing mount and the sealing arrangement in a direction which lies in an extension plane which is substantially parallel to at least a section of the window pane.
13. The vehicle component according to any of aspects 9 to 12, wherein the sealing mount is arranged at an edge of the frame component.
14. The vehicle component according to any of aspects 9 to 13, wherein the sealing mount is configured integrally with at least a section of the frame component.
15. The vehicle component according to any of aspects 9 to 14, wherein at least one of the sealing mount and the sealing arrangement includes at least one attachment section configured to at least partially engage the other of the sealing mount and the sealing arrangement, wherein the attachment section includes a first section and a second section, and optionally also a third section, wherein the first section, the second section, and/or the third section are angled relative to each other by an angle greater than 0°, preferably wherein the second section interconnects the first section and the third section, preferably wherein the second section is angled relative to the first section by an angle from 45° to 135°, preferably from 60° to 120°, more preferably from 75° to 105°, most preferably by substantially 90°, preferably wherein the third section is angled relative to the second section by an angle from 45° to 135°, preferably from 60° to 120°, more preferably from 75° to 105°.
16. The vehicle component according to any of aspects 9 to 15, wherein at least a section of the sealing mount and at least a section of the sealing arrangement are each configured as substantially U-shaped sections which are configured to interconnect with each other to secure the sealing arrangement to the sealing mount.
17. The vehicle component according to any of aspects 4 to 16, wherein the guide elements are interconnected by at least one interconnecting element which preferably extends along an upper peripherical section of the frame component.
18. The vehicle component according to aspect 17, wherein the interconnecting element is configured such that at least a portion of the sealing arrangement is securable to the interconnecting element.
19. The vehicle component according to any of the preceding aspects, further including at least one reinforcement structure which is connected to the frame component and which is configured to at least partially reinforce the frame component.
20. The vehicle component according to any of the preceding aspects, wherein the vehicle component is configured such that a circumferential edge, preferably the entire circumferential edge, of an exterior surface of the window pane, which faces the exterior side of the window pane, is substantially flush with an outer surface of the frame component which faces an exterior of the vehicle, when the window pane is in a completely closed state.
21. The vehicle component according to any of the preceding aspects, wherein the sealing support device is configured as a window pane guide for guiding the window pane during the movement between a closed position and an open position of the window pane.
22. The vehicle component according to any of the preceding aspects, wherein the sealing support device includes at least two side segments, wherein the side segments are arranged towards or at opposite sides of the window opening to guide the window pane on opposite sides of the window pane during the movement between a closed position and an open position of the window pane.
23. The vehicle component according to any of the preceding aspects, wherein the sealing support device includes at least one top segment which interconnects the two side segments.
24. The vehicle component according to any of the preceding aspects, wherein the sealing support device is attached to the frame component in a non-integral manner.
25. The vehicle component according to any of the preceding aspects, wherein the sealing support device is:
   made of a different material and/or by a different type of manufacturing process than the frame component, preferably by a type of manufacturing process other than stamping;
      and/or
   made of a non-sheet metal material.
26. The vehicle component according to any of the preceding aspects, wherein the sealing support device extends along side portions and a top portion of the window pane, when the window pane is in a completely closed position.
27. The vehicle component according to any of the preceding aspects, wherein the sealing support device extends beyond a lower edge of the window opening.
28. The vehicle component according to any of the preceding aspects, wherein the sealing support device is removably attached to the frame component.
29. The vehicle component according to any of the preceding aspects, wherein at least one of the sealing support device and the sealing arrangement includes at least one receiving opening and the other of the sealing support device and the sealing arrangement includes an engagement portion configured to be at least partially received in the receiving opening to secure the sealing arrangement to the sealing support device.
30. The vehicle component according to aspect 29, wherein the receiving opening extends into the sealing support device and/or the sealing arrangement, respectively, along a receiving opening plane which is substantially parallel to at least a section of the window pane.
31. The vehicle component according to any of the preceding aspects, wherein at least one of the sealing support device and the sealing arrangement extends at least partially into at least a section of the other of the sealing support device and the sealing arrangement in a direction which lies in an extension plane which is substantially parallel to at least a section of the window pane.
32. The vehicle component according to any of the preceding aspects, wherein the sealing support device is arranged at an edge of the frame component.
33. The vehicle component according to any of the preceding aspects, wherein the sealing support device is attached to an inner surface of the frame component which faces away from the exterior of the vehicle.
34. The vehicle component according to any of the preceding aspects, wherein the sealing arrangement is configured as an integrally and/or monolithically formed unit, preferably wherein the entire sealing arrangement is arranged completely on the interior side of the window pane, at least when the window pane is in a completely closed position
35. The vehicle component according to any of the preceding aspects, wherein at least one sealing support device is configured to reinforce the frame component.
36. A mounting assembly configured to mount at least one window pane to at least one frame component, preferably at least one door frame, of a vehicle component, preferably a door of a vehicle, the frame component defining at least one window opening therein and the window pane being configured to be moved relative to the frame component to selectively open and close the window opening, wherein the mounting assembly includes:
   at least one sealing arrangement configured to at least partially seal against the window pane to at least partially seal an interior of the vehicle from an exterior of the vehicle, when the window pane is mounted to the frame component and at least when the window pane is in a completely closed state,
   preferably wherein the mounting assembly includes at least one sealing support device, wherein the sealing arrangement may be mountable to the sealing support device and the sealing support device may be attachable to the frame component,
   optionally wherein the entire sealing arrangement is arranged completely on an interior side of the window pane which faces the interior of the vehicle, when the window pane is in a completely closed state.
37. A vehicle including at least one drive means configured to drive the vehicle, at least one cabin configured to house at least one object, preferably at least one human, at least one cabin opening which connects the cabin and an environment of the vehicle, and at least one vehicle component, preferably at least one vehicle door, according to any of aspects 1 to 35, the vehicle component being configured to selectively open and close the cabin opening.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: shows, in a schematic top view, a vehicle door according to an embodiment of the present disclosure;
- Fig. 2: shows, in a schematic top view, a vehicle door according to a further embodiment of the present disclosure;
- Fig. 3: shows, in a schematic top view, a vehicle door according to a further embodiment of the present disclosure;
- Fig. 4: shows, in a schematic side view, a section of a vehicle which includes a vehicle door according to an embodiment of the present disclosure;
- Fig. 5: shows, in a schematic side view, a section of a vehicle which includes a vehicle door according to an embodiment of the present disclosure.
- Fig. 6: shows, in a schematic perspective view, a vehicle door according to an embodiment of the present disclosure;
- Fig. 7: shows, in a schematic perspective view, the vehicle door of Fig. 6;
- Fig. 8: shows, in a schematic cross-sectional view, the vehicle door of Figs. 6 and 7;
- Fig. 9: shows, in a schematic cross-sectional view, the vehicle door of Figs. 6 to 8;
- Fig. 10: shows, in a schematic cross-sectional view, the vehicle door of Figs. 6 to 9.

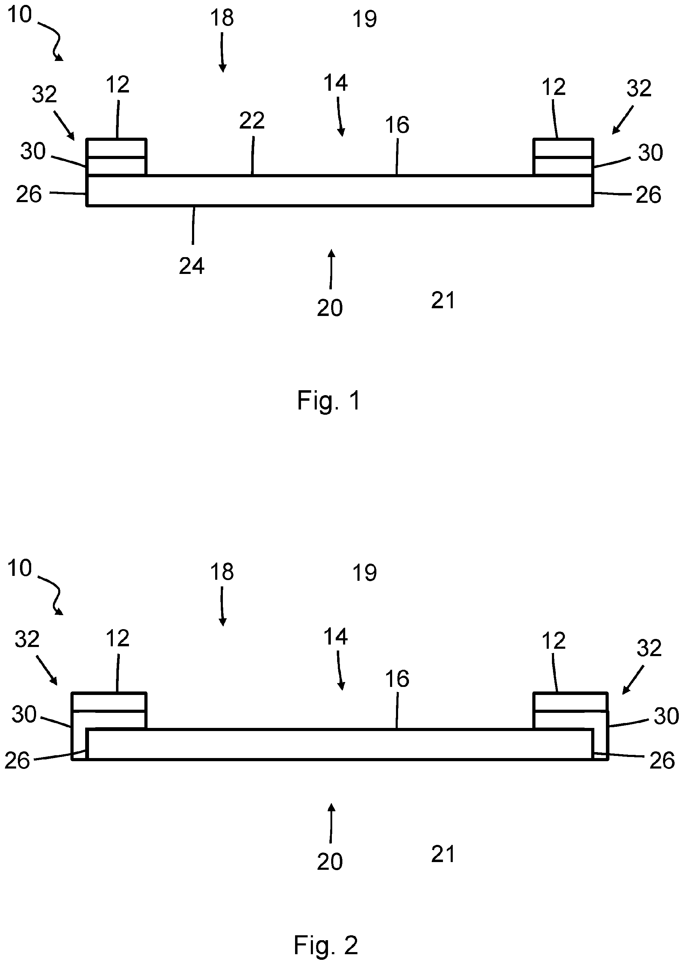

Figs. 1 to 3 show exemplary configurations of a vehicle door for explanatory purposes only. The configurations shown in Figs. 1 to 3 are not embodiments of the present invention.

Fig. 1 shows, in a schematic top view, a vehicle door 10 for a vehicle. The vehicle door 10 may include at least one door frame 12 which may define at least one window opening 14 therein.

The vehicle door 10 may further include at least one window pane 16 configured to be moved relative to the door frame 12 to selectively open and close the window opening 14. Only a portion of the door frame 12 is depicted schematically in Fig. 1. The door frame 12 may represent the primary structure of the vehicle door 10 and may include or define an exterior or outer skin of the vehicle, when the vehicle is fully assembled.

The window pane 16 may have an interior side 18 which faces an interior 19 of the vehicle and an exterior side 20. The exterior side 20 may face an exterior 21 of the vehicle, when the window pane 16 is in a closed position.

The interior side 18 of the window pane 16 may include at least one inner surface 22 of the window pane 16 which faces and/or at least partially delimits a cabin of the vehicle. The exterior side 20 of the window pane 16 may include at least one exterior surface 24 of the window pane 16. The window pane 16 may include at least one side portion 26, e.g., a peripheral edge, which connects the inner surface 22 of the window pane 16 and the exterior surface 24 of the window pane 16.

The vehicle door 10 may further include at least one sealing arrangement 30 configured to at least partially seal against the window pane 16 to at least partially seal the interior from the exterior of the vehicle, at least when the window pane 16 is in a completely closed position.

The entire sealing arrangement 30 may be arranged completely on the interior side 18 of the window pane 16, at least when the window pane 16 is in a completely closed position.

Thus, the vehicle door 10, more specifically the window pane 16, may be free of the sealing arrangement 30, or any sealing arrangement, along the entire exterior surface 24 of the window pane 16. This may eliminate an interface between a sealing arrangement 30 and the window pane 16 on an exterior side of the vehicle, in particular on an exterior side of the window pane 16, and may provide a flush transition between the window pane 16 and an outer skin of the vehicle, e.g., an outer surface of the door frame 12. This may improve one or more aerodynamic properties of the vehicle door which may result in a reduced energy consumption of the vehicle. Moreover, this may enhance the aesthetic appeal of the vehicle, e.g., by providing a sleeker and more seamless exterior of the vehicle.

As shown in Fig. 1, the side portion 26 of the window pane 16, if present, may also be free of the sealing arrangement 30, or any sealing arrangement, e.g., since the sealing effect along the inner surface 22 of the window pane 16 by means of the sealing arrangement 30 may be sufficient.

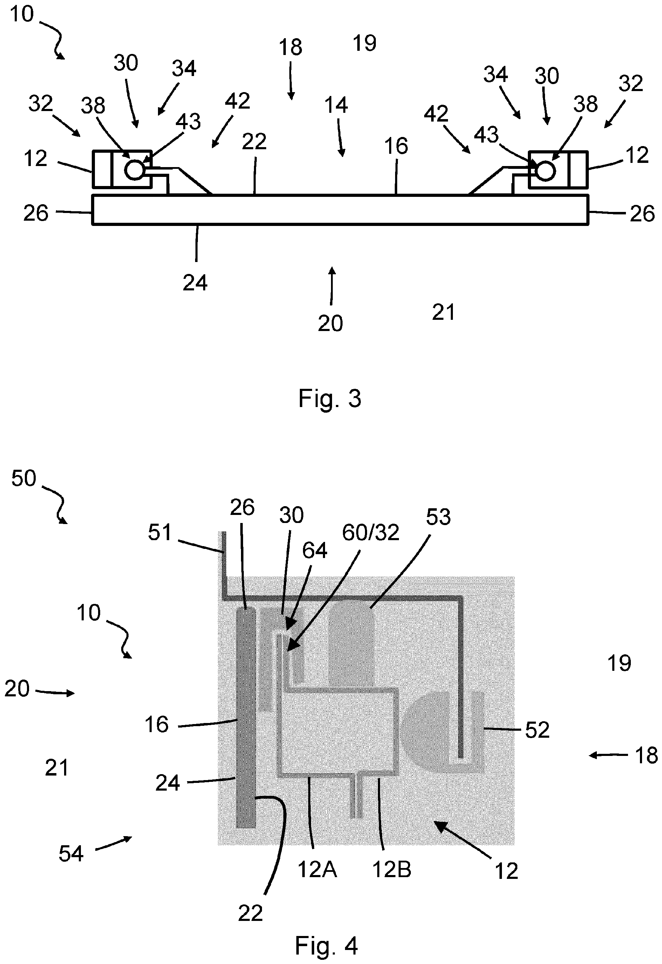

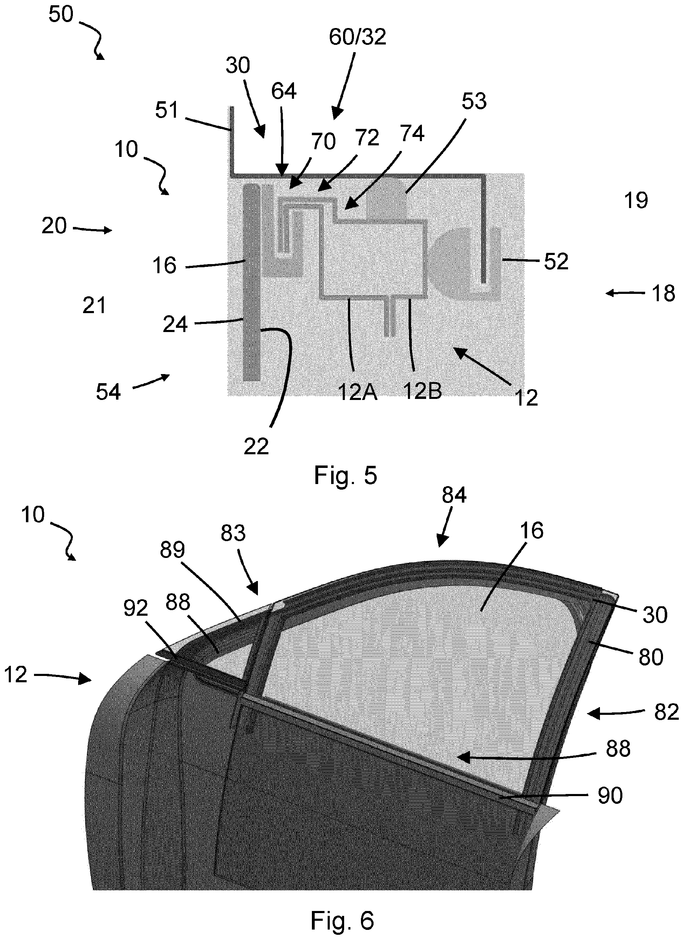

The vehicle door 10 may further include at least one sealing mount 32 configured such that at least a portion of the sealing arrangement 30 is securable to the sealing mount 32. Various configurations and features of the sealing mount 32 are shown in Figs. 4 and 5 and described in more detail further below.

Fig. 2 shows, in a schematic top view, a similar configuration of the vehicle door 10 shown in Fig. 1. By contrast to the vehicle door 10 shown in Fig. 1, the sealing arrangement 30 of the vehicle door 10 according to the embodiment of Fig. 2 at least partially extends along the side portion 26 of the window pane 16. The side portion 26 may be considered to be part of the interior side 18 of the window pane 16, in particular since the side portion 26 also does not face an exterior 21 of the vehicle, i.e., the same as the inner surface 22 of the window pane 16. In such a configuration, the vehicle door 10, more specifically the window pane 16, is also free of the sealing arrangement 30, or any sealing arrangement, along the entire exterior surface 24 of the window pane 16.

However, the configurations shown in Figs. 1 and 2 may be disadvantageous, since a negative pressure may be prevalent on the outside of the cabin of the vehicle, in particular during movement of the vehicle. This may exert a force on the window pane 16 towards the outside of the cabin of the vehicle which may cause movement and/or displacement of the window pane 16 towards the outside of the cabin of the vehicle.

Fig. 3 shows, in a schematic top view, a vehicle door 10 according to a further embodiment of the present disclosure. As shown in Fig. 3, the vehicle door 10 may further include at least one guide element 34 configured to guide the window pane 16 during the movement between a closed position and an open position of the window pane 16. The guide element 34 may be integrated into the doorframe 12, e.g., integrally, or into the sealing arrangement 30 as shown in Fig. 3. According to the configuration of Fig. 3, the sealing arrangement 30/guide element 34 may include at least one channel 38. The vehicle door 10 further may include at least one counter-guide element 42 configured to be at least partially slidably received within the channel 38 to guide the window pane 16 during the movement between the open position and the closed position of the window pane 16. A shown in Fig. 3, the counter-guide element 42 may include an enlarged end section 42 to prevent unwanted detachment of the counter-guide element 42 from the channel 38.

In particular, as shown in Fig. 3, the vehicle door 10 may include at least two guide elements 34 and at least two corresponding counter-guide elements 42. The guide elements 34 and the counter-guide elements 42 may be spaced apparat from each other, respectively, e.g., towards or at opposite sides of the window opening 14 and/or the window pane 16.

Hence, the configuration shown in Fig. 3 may slidably retain the window pane 16, e.g., when a negative pressure is prevalent on the outside of the cabin of the vehicle, in particular during movement of the vehicle. However, the configuration shown in Fig. 3 may lead to a bulky construction which may require a relatively large amount of space.

Figs. 4 and 5 show, in schematic side views, a section of a vehicle 50 which includes a vehicle door 10, e.g., the vehicle door 10 according to any of Figs. 1 to 3. The vehicle 50 may include at least one structural member 51, e.g., a section of a roof of the vehicle 50, which is adjacent to the vehicle door 10. The structural member 51 may be mounted or supported by a mounting element 52. The mounting element 52 may also provide a stop for the door frame 12. Moreover, the vehicle 50 may include at least one engagement element 53 arranged between the structural member 51 and the vehicle door 10, e.g., the door frame 12. The engagement element 53 may be attached to the structural member 51 and may engage the vehicle door 10, e.g., the door frame 12, when the vehicle door 10 is in a closed position. Alternatively, the engagement element 53 may be attached to the vehicle door 10, e.g., the door frame 12, and may engage the structural member 51, when the vehicle door 10 is in a closed position. The engagement element 53 may provide a sealing effect between the vehicle door 10, e.g., the door frame 12, and the structural member 51.

The vehicle may include at least one cabin, i.e., the interior 19 of the vehicle 50, configured to house at least one object, preferably at least one human, and at least one cabin opening 54 which connects the cabin/interior 19 and the exterior/environment 21 of the vehicle 50. The vehicle door 10 may be configured to selectively open and close the cabin opening 54.

The door frame 12 of the vehicle door 10 may include a first door frame component 12A and at least a second door frame component 12B. The door frame components 12A, 12B may be integrally formed. Alternatively, the door frame components 12A, 12B may be individual components which are connected to each other by known connection means, e.g., by welding, gluing, crimping, rivets, etc. The door frame 12, more specifically the door frame components 12A, 12B, may be made of sheet metal which is or was formed by stamping or pressing.

As shown in Fig. 4, the sealing mount 32 may be integrally formed with the door frame 12, e.g., the sealing mount 32 may be a part of the door frame 12. For instance, as shown in Fig. 4, the sealing mount 32 may be provided along one or more sections of at least one edge 60 of the doorframe 12.

The sealing arrangement 30 may include at least one receiving opening 64 and the sealing mount 32 may include an engagement portion, e.g., the edge 60, configured to be at least partially received in the receiving opening 64 to secure the sealing arrangement 30 to the sealing mount 32.

The receiving opening 64 may extend into the sealing arrangement 30 along a receiving opening plane which is substantially parallel to at least a section of the window pane 16, e.g., to the exterior surface 24 and/or the interior surface 22 of the window pane 16.

The sealing mount 32 may extend at least partially into at least a section of the sealing arrangement 30, e.g., the receiving opening 64, in a direction which lies in an extension plane which is substantially parallel to at least a section of the window pane 16, e.g., to the exterior surface 24 and/or the interior surface 22 of the window pane 16.

The sealing mount 32 may include at least one attachment section, e.g., the edge 60, configured to at least partially engage the sealing arrangement 30. As shown in Fig. 5, the attachment section 60 may include a first section 70, a second section 72, and a third section 74. The second section 72 may interconnect the first section 70 and the third section 74.

The first section 70, the second section 72, and/or the third section 74 may be angled relative to each other, i.e., by an angle greater than 0°. For instance, the second section 72 may be angled relative to the first section 70 by an angle from 45° to 135°, preferably from 60° to 120°, more preferably from 75° to 105°, most preferably by substantially 90°. The third section 74 may be angled relative to the second section 72 by an angle from 45° to 135°, preferably from 60° to 120°, more preferably from 75° to 105°, most preferably by substantially 90°.

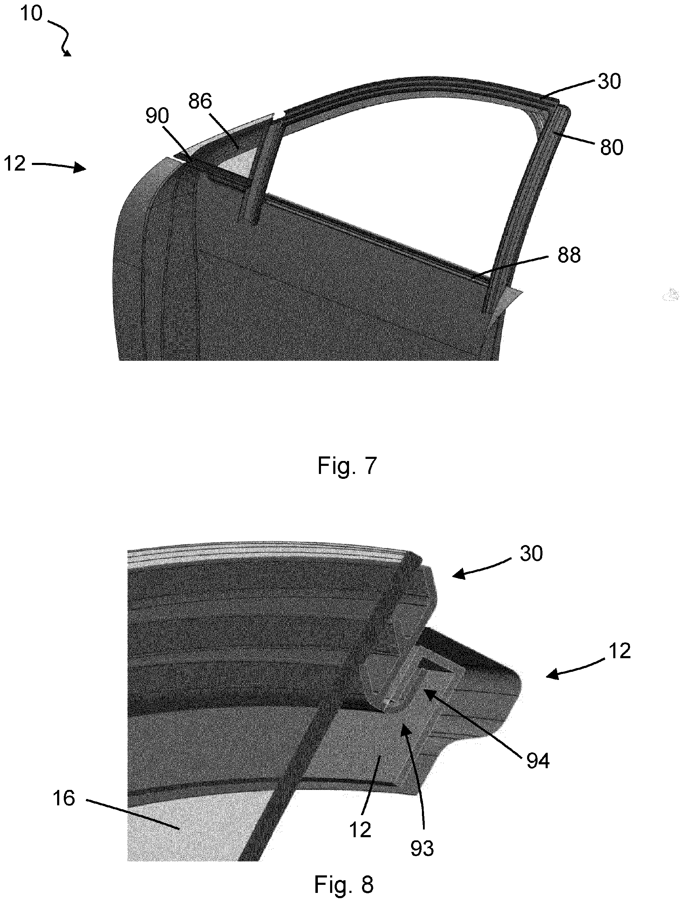

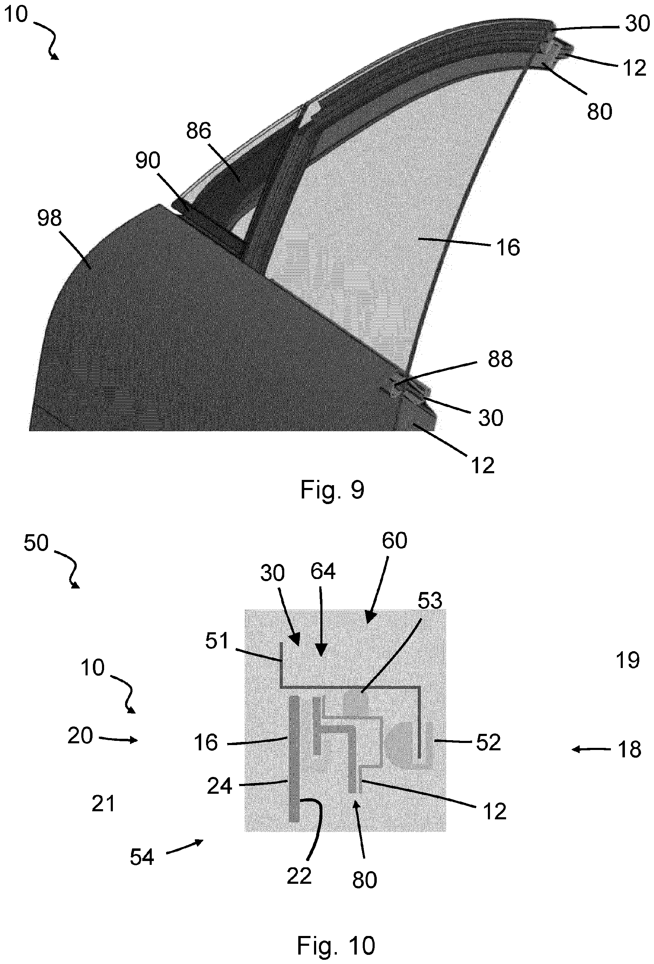

Figs. 6 to 10 show a preferred embodiment of the invention which may overcome one or more of the above-mentioned drawbacks. In particular, the vehicle door 50 shown in Figs. 6 to 10 may include at least one sealing support device 80. The sealing arrangement 30 may be mounted to the sealing support device 80. The sealing support device 80 may be attached to the door frame.

Providing a separate sealing support device 80 which is then attached, preferably removably attached, to the door frame 12 may provide greater flexibility for configuring the sealing mount, i.e., the sealing support device 80, since the configuration of the sealing support device 80 may then be independent from the type of manufacturing process used to make the door frame 12. For instance, the configuration of the sealing support device 80 is not bound to stamping/pressing, e.g., sheet metal, which is often the standard method of manufacturing doorframes. Instead, a number of further types of manufacturing processes may be employed to manufacture the sealing support device 80 which may provide greater flexibility in configuring the sealing support device 80, e.g., the shape and/or dimensions of the sealing support device 80, and/or achieving a narrower tolerance range for a more precise manufacturing of the sealing support device 80. This may allow the sealing support device 80 to be optimized more precisely, e.g., in a space-efficient manner, which improve the packaging of the vehicle door 50.

The sealing support device 80 may be configured as a window pane guide for guiding the window pane 16 during the movement between a closed position and an open position of the window pane 16. The sealing support device 80 may extend along side portions and a top portion of the window pane 16, when the window pane 16 is in a completely closed position. The sealing support device 80 may extend beyond a lower edge 87 of the window opening 14, e.g., to extend a guiding surface of the sealing support device 80 for the window pane 16.

The sealing support device 80 may include at least two side segments 82, 83 which may be arranged towards or at opposite sides of the window opening 14 to guide the window pane 16 on opposite sides of the window pane 16 during the movement between a closed position and an open position of the window pane 16. The sealing support device 80 may include at least one top segment 84 which interconnects the two side segments 82, 83.

The vehicle door 50 may include at least one second window pane 88 which may also include a sealing arrangement 89, which may be similar to the sealing arrangement 30.

The vehicle door 50 may include at least one additional seal 90 which may be separate from the sealing arrangement 30. The seal 90 may be arranged along the exterior surface 24 of the window pane 16. The vehicle door 50 may include at least one further seal 92 which may be arranged along the exterior surface of the window pane 88.

At least one of the sealing support device 80 and the sealing arrangement 30 may include at least one receiving opening 93 and the other of the sealing support device 80 and the sealing arrangement 30 may includes an engagement portion 94 configured to be at least partially received in the receiving opening 93 to secure the sealing arrangement 30 to the sealing support device 80.

The receiving opening 93 may extend into the sealing support device 80 and/or the sealing arrangement 30, respectively, along a receiving opening plane which is substantially parallel to at least a section of the window pane 16.

At least one of the sealing support device 80 and the sealing arrangement 30 may extend at least partially into at least a section of the other of the sealing support device 80 and the sealing arrangement 30 in a direction which lies in an extension plane which is substantially parallel to at least a section of the window pane 16.

The vehicle door 50 may include an outer shell or skin 98. The additional seal 88 may be attached to the outer shell or skin 98.

## Claims

1. A vehicle door (10) for a vehicle (50) which includes:
at least one door frame (12) which defines at least one window opening (14) therein;
at least one window pane (16) configured to be moved relative to the door frame (12) to selectively open and close the window opening (14), wherein the window pane (16) has an interior side (18) which faces an interior (19) of the vehicle (50) and an exterior side (20) which faces an exterior (21) of the vehicle (50), when the window pane (16) is in a closed position;
at least one sealing arrangement (30) configured to at least partially seal against the window pane (16) to at least partially seal the interior (19) from the exterior (21) of the vehicle (50), at least when the window pane (16) is in a completely closed position; and
at least one sealing support device (80);
wherein the sealing arrangement (30) is mounted to the sealing support device (80); and
wherein the sealing support device (80) is attached to the door frame (12).

2. The vehicle door (10) according to claim 1, wherein the sealing support device (80) is configured as a window pane guide for guiding the window pane (16) during the movement between a closed position and an open position of the window pane (16).

3. The vehicle door (10) according to claim 1 or 2, wherein the sealing support device (80) includes at least two side segments (82, 83), wherein the side segments (82, 83) are arranged towards or at opposite sides of the window opening (14) to guide the window pane (16) on opposite sides of the window pane (16) during the movement between a closed position and an open position of the window pane (16).

4. The vehicle door (10) according to claim 3, wherein the sealing support device (80) includes at least one top segment (84) which interconnects the two side segments (82, 83).

5. The vehicle door (10) according to any of the preceding claims, wherein the sealing support device (80) is:
made of a different material and/or by a different type of manufacturing process than the door frame (12), preferably by a type of manufacturing process other than stamping;
and/or
made of a non-sheet metal material.

6. The vehicle door (10) according to any of the preceding claims, wherein the sealing support device (80) extends along side portions and a top portion of the window pane (16), preferably continuously, when the window pane (16) is in a completely closed position.

7. The vehicle door (10) according to any of the preceding claims, wherein the sealing support device (80) extends beyond a lower edge (87) of the window opening (14).

8. The vehicle door (10) according to any of the preceding claims, wherein at least one of the sealing support device (80) and the sealing arrangement (30) includes at least one receiving opening (93) and the other of the sealing support device (80) and the sealing arrangement (30) includes an engagement portion (94) configured to be at least partially received in the receiving opening (93) to secure the sealing arrangement (30) to the sealing support device (80).

9. The vehicle door (10) according to claim 8, wherein the receiving opening (93) extends into the sealing support device (80) and/or the sealing arrangement (30), respectively, along a receiving opening plane which is substantially parallel to at least a section of the window pane (16).

10. The vehicle door (10) according to any of the preceding claims, wherein at least one of the sealing support device (80) and the sealing arrangement (30) extends at least partially into at least a section of the other of the sealing support device (80) and the sealing arrangement (30) in a direction which lies in an extension plane which is substantially parallel to at least a section of the window pane (16).

11. The vehicle door (10) according to any of the preceding claims, wherein the sealing support device (32) is arranged at an edge (60) of the door frame (12).

12. The vehicle door (10) according to any of the preceding claims, wherein the sealing support device (80) is attached to an inner surface of the door frame (12) which faces away from the exterior (21) of the vehicle (50).

13. The vehicle door (10) according to any of the preceding claims, wherein the sealing arrangement (30) is configured as an integrally and/or monolithically formed unit, preferably wherein the entire sealing arrangement (30) is arranged completely on the interior side (18) of the window pane (16), at least when the window pane (16) is in a completely closed position

14. The vehicle door (10) according to any of the preceding claims, wherein at least one sealing support device (80) is configured to reinforce the door frame (12).

15. A vehicle (50) including at least one cabin (19) configured to house at least one object, preferably at least one human, at least one cabin opening (54) which connects the cabin (19) and an environment (21) of the vehicle (50), and at least one vehicle door (10) according to any of claims 1 to 14, the vehicle door (10) being configured to selectively open and close the cabin opening (54).
